# EUROPÄISCHE PATENTSCHRIFT

(11) **EP 2 404 857 B1**
(45) Veröffentlichungstag und Bekanntmachung des Hinweises auf die Patenterteilung: **17.05.2017**
(21) Anmeldenummer: 11004272.8
(22) Anmeldetag: 24.05.2011
(51) Int. Cl.: B65H 75/36, H02G 1/06

(54) **Bevorratungsbehälter, unterirdische Leitungsbevorratung und System zur unterirdischen Anordnung einer Leitungsbevorratung**
Storage container, subterranean cable storage and system for subterranean positioning of a cable storage
Réservoir d'alimentation, alimentation souterraine de cable et système souterrain d'agencement d'une alimentation de cable

(30) Priorität: 07.07.2010 DE 102010026397
(43) Veröffentlichungstag der Anmeldung: 11.01.2012
(73) Patentinhaber: gabo Systemtechnik GmbH, 94559 Niederwinkling (DE)
(72) Erfinder: Geiger, Alexander, 94559 Niederwinkling (DE); Lederer, Roland, 94374 Schwarzbach (DE); Karl, Markus, 94327 Bogen (DE)
(74) Vertreter: Schmid, Nils T.F.

(56) Entgegenhaltungen:
- EP-A1- 2 166 391
- WO-A1-99/29003
- US-B1- 6 296 118
- US-B1- 7 391 324

## Beschreibung

Die Erfindung betrifft einen Bevorratungsbehälter, der unterirdisch insbesondere an Baustellen deponiert werden soll.

Die Erfinder des Erfindungsgegenstands haben sich darüber Gedanken gemacht, die Materialbereitstellung von Kabeln, wie Telefonleitungen oder Datenkabeln, wie Hochgeschwindigkeitsleitungen und Glasfaserleitungen, Kabelschutzrohren oder Leerrohren an Baustellen zu optimieren. Bei der Entwicklung des Erfindungsgegenstands ist erkannt worden, dass im Verlauf eines Bauprojekts von der ersten Planungsphase bis zur Fertigstellung häufig Planungsänderungen und ein erhöhter Bedarf an Leitungen unmittelbar vor Ort der Baustelle auftritt. Auch vor allem bei Bürokomplexen können nach Fertigstellung benutzerseitige Änderungswünsche entstehen, welche einen erhöhten Bedarf an Leitungen fordern. Zum Zeitpunkt des Rohbaus und einer Tiefbauphase sind sämtliche Kanalschächte offen, in denen die während der ersten Planungsphase benötigten Leitungen verlegt werden. Nach dieser ersten Bauphase werden Kanalschächte aufgeschüttet, um den Gebäudebau durch den Hochbau durchführen zu können. Erst im Verlauf der zweiten Planungsphase kann es notwendig sein, Änderungen in der Leitungsarchitektur an bestimmten Stellen der Baustelle vorzunehmen. Sind solche Änderungen schließlich durchzuführen, kann es zu einem hohen Mehraufwand an Verlegearbeiten kommen und/oder eine unterirdische Kanalschachtstelle muss freigelegt werden, um von dort aus neue Zuleitungen in dem Gebäude oder an andere Zielstellen zu verlegen.

Eine Splicebox ist aus EP 2 166 391 A1 bekannt. WO 99/29003 A1 offenbart einen Behälter für ein faseroptisches Netzwerk.

Der erfindungsgemäße Gegenstand nach Anspruch 1 löst die Aufgabe, einen flexibel, schnell befriedigbaren Leitungsbedarf an Baustellen bereitzustellen, indem ein Bevorratungsbehälter für eine oder mehrere flexible Leitungen, wie Kabel, Kabelschutzrohre oder Leerrohre, für eine unterirdische Deponierung ausgelegt wird. Der erfindungsgemäße Bevorratungsbehälter muss also entsprechend druckfest und widerstandsfest sein, um die aufgenommene flexible Leitung vor der Erde oder dem Schüttgut und dessen statischem Druck im verlegten Zustand
zu schützen. Es zeigte sich, dass ein gespritzter Kunststoff für die Bevorratungsbehälter geeignet ist. Auch andere starre Materialien, die hohe Druckspannung aushalten, können für die Bildung des Bevorratungsbehälters herangezogen werden. Der erfindungsgemäße Bevorratungsbehälter ist durch eine starre Schalenform mit einer Innenwölbung gebildet, die zumindest teilweise einen Vorratsraum für eine Leitungswicklung bereitstellt. Vorzugsweise ist der schalenförmige Bevorratungsbehälter aus einem Stück gefertigt, insbesondere aus einem Kunststoffstück gespritzt. Wenigstens die Hälfte des durch die Innenwölbung begrenzten Raumes ist dazu vorgesehen, die Leitungswicklung aufzunehmen. Unter Leitungswicklung ist eine oder mehrere gewickelte Leitungen zu verstehen, die vorzugsweise in einem kreisförmigen Wicklungsverbund angeordnet sind.

Der Bevorratungsbehälter kann vollständig vorzugsweise fluiddicht geschlossen sein, allerdings ist es bevorzugt, die Schalenform des Bevorratungsbehälters an der Unterseite offen zu halten. Dabei kann der Bevorratungsbehälter eine Glocken- oder Halbschalenform aufweisen.

Die gewickelte Leitung ist vollständig in dem Bevorratungsbehälter untergebracht. Bei einer glockenförmigen Schalenform ist die Leitungswicklung an einem oberen Innenbereich des glockenförmigen Bevorratungsbehälters untergebracht. Der untere Begrenzungsrand des Bevorratungsbehälters, auf dem letzterer beim unterirdischen Deponieren in einem Kanalschacht abgelegt ist, liegt vollständig unterhalb der gesamten Leitungswicklung. Eine rotationssymmetrische Glockenform des Bevorratungsbehälters hat den Vorteil, höchst stabil zu sein und einen ausreichenden Schutz vor der Last des Erdmaterials zu bieten, das beim Auffüllen der unterirdischen Kanalstruktur auf dem Bevorratungsbehälter lastet.

Wird auf einer Baustelle eine sofortige Verlegung eines Kabels, Kabelschutzrohres oder Leerrohres gefordert, kann ein derartiges Vorhaben unmittelbar in die Tat umgesetzt werden, indem der unterirdisch abgelegte Bevorratungsbehälter mit der Leitungswicklung freigelegt wird und die Leitungswicklung genutzt wird. Diese Option des unmittelbaren Zugriffs auf eine vor Ort liegende Bevorratung einer Leitung ist auch nach Jahren noch möglich. Dies hat auch den Vorteil, dass die bevorratete Leitung kompatibel zu den bereits verlegten Leitungen auch noch nach Jahren ist.

Bei einer bevorzugten Ausführung der Erfindung ist der Vorratsraum und/oder die Innenwölbung des Bevorratungsbehälters im Wesentlichen rotationssymmetrisch. Der Vorratsraum und/oder die Innenwölbung bildet einen Wickelkern, der im Wesentlichen im Zentrum des rotationssymmetrischen Vorratsraums ausgebildet ist. Der Wickelkern kann als Innenvorsprung an einer Decke des Bevorratungsbehälters innenseitig nach unten ragen, wobei um den Wickelkern die Leitungswicklung konzentrisch liegt. Der Wickelkern hat eine Rotationssymmetrieform, die konzentrisch zur Rotationssymmetrieachse des Vorratsraums und/oder der Innenwölbung angeordnet ist.

Bei einer bevorzugten Ausführung der Erfindung sind das Gehäuse und der Wickelkern aus einem Kunststoffstück gespritzt.

Ein vorzugsweise kreisförmiger Vorratsraumkanal, der die Leitungswicklung aufnimmt, ist außenseitig durch eine umlaufende seitliche Innenwand, oberseitig durch eine Decke der Innenwölbung sowie innenseitig durch eine Außenseite des Wickelkerns begrenzt. Der Vorratsraumkanal hat eine radiale Breite, die größer als der maximale Radius des Wickelkerns ist.

Bei einer bevorzugten Ausführung der Erfindung sind im Inneren des Bevorratungsbehälters im Wesentlichen zwei Raumebenen definiert, die nicht voneinander strukturell abgegrenzt sein müssen. Im montierten Zustand des Bevorratungsbehälters liegt der Vorratsraum für die Leitungswicklung oberhalb eines Durchführraumes wenigstens einer bereits verlegten Tiefbauleitung. Der Durchführraum, in dem keine Leitungswicklung liegen soll, ist zur vollständigen Aufnahme einer Tiefbauleitung dimensioniert. Der Durchführraum ist seitlich größtenteils von einer Seitenwand des Bevorratungsbehälters begrenzt. Die Seitenwand hat wenigstens ein Paar Durchgangsgänge zum Aufnehmen der Tiefbauleitung, sodass im montierten Zustand des Bevorratungsbehälters letzterer die Tiefbauleitung längs der Abmessung des Bevorratungsbehälters überdeckt. Das Durchgangspaar dient vor allem auch dazu, den Bevorratungsbehälter relativ zur Tiefbauleitung eindeutig zu positionieren. Hierzu ist der Bevorratungsbehälter bodenseitig vollkommen frei zugänglich, also unverschlossen.

Bei einer bevorzugten Ausführung der Erfindung hat der Bevorratungsbehälter eine Glocken- oder Haubenform, die eine insbesondere geschlossene Decke und eine umlaufende, vorzugsweise kreisförmige Seitenwand umfasst, und bodenseitig offen ist. Die Seitenwand bildet einen freien, vorzugsweise im Wesentlichen kreisförmigen Abstellrand, der gegebenenfalls durch wenigstens ein Paar Durchgänge für die Tiefbauleitung unterbrochen ist. Die Seitenwand hat wenigstens ein Paar, vorzugsweise zwei Paare, sich diametral gegenüberliegender, bodenseitig offener Durchgänge, die derart dimensioniert sind, dass eine bereits verlegte Tiefbauleitung, wie eine Gasleitung, ein Leitungsbündel, eine Wasserleitung, wie ein PE-Rohr, vorzugsweise mit einem Außendurchmesser von bis zu 100mm, vorzugsweise bis zu 50mm oder 60mm, vollständig aufgenommen ist, sodass insbesondere sich die Tiefbauleitung im Wesentlichen geradlinig durch den Bevorratungsbehälter unterhalb des Vorratsraums seitlich an dem Wickelkern vorbei erstreckt.

Bei einer bevorzugten Ausführung der Erfindung ist in der Seitenwand wenigstens ein Schlitzdurchgang, vorzugsweise zwei sich diametral gegenüberliegende Schlitzdurchgänge ausgebildet. Der Schlitzdurchgang kann insbesondere bodenseitig offen sein. Der Schlitzdurchgang ist derart dimensioniert, dass die gewickelte Leitung durch den Schlitzdurchgang abgewickelt werden kann. Hierzu weist der Schlitzdurchgang eine zur Umfangsbreite kleinere Höhe auf, wobei die Umfangsbreite größer als 50mm ist.

Bei einer Weiterbildung der Erfindung ist an einer insbesondere im Wesentlichen horizontalen Außenseite eines Deckenbereichs des Bevorratungsbehälters eine kreisförmige Vertiefung oder Rinne ausgebildet, die derart dimensioniert ist, dass die im Bevorratungsbehälter auszunehmende Leitung hineinpasst. Die Rinne dient als Wickelstarthilfe, um die in dem Bevorratungsbehälter unterzubringende Leitungswicklung zu erstellen. Die Vertiefung hat in deren Verlauf eine konstante Tiefe zur im Wesentlichen planen Außenseite des Deckenbereichs des Bevorratungsbehälters. Die Vertiefung kann mit einer Hinterschnittaufnahme und einem Verjüngungszugang derart dimensioniert sein, dass die Außenabmessung der zu wickelnden Leitung kleiner als die Hinterschnittaufnahme und größer als der Verjüngungszugang ist, sodass bei Hineindrücken und Überwinden einer elastischen Formungsarbeit am Verjüngungszugang die zu wickelnde Leitung innerhalb der Hinterschnittaufnahme verbleibt, um die gewünschte Wicklung entsprechend des Durchmessers der Vorratsaufnahme des Bevorratungsbehälters durchzuführen. Es sei klar, dass die Vertiefung oder die Rinne einen zur Rotationssymmetrieachse des Bevorratungsbehälters definierten Durchmesser aufweist, der in Wesentlichen den durchschnittlichen Durchmesser der Vorratsaufname entspricht.

Bei einer bevorzugten Ausführung der Erfindung ist im Verlauf der Wickelstarthilfe, also der Vertiefung, wenigstens eine über die Vertiefung hinaus axial eindringende Einbuchtung, vorzugsweise in äquidistanten Abständen angeordnete Einbuchtungen, zum Einfädeln eines Leitungs- oder Kabelbinders ausgebildet.

Bei einer bevorzugten Ausführung der Erfindung ist an einer Außenseite eines Deckenabschnitts des Bevorratungsbehälters eine Sitzaufnahme als Profilsenke für ein Ortungsgerät ausgebildet. Die Sitzaufnahme ist zentral zur Rotationssymmetrieachse des Bevorratungsbehälters ausgebildet. Die Sitzaufnahme definiert eine im Wesentlichen halbkugelförmige Aufnahmefläche. Im Wesentlichen entspricht die Profilsenke der Sitzaufnahme einer Negativform des Wickelkerns an der Innenseite des Bevorratungsbehälters.

Die Erfindung betrifft auch eine unterirdische Leitungsbevorratung mit einem erfindungsgemäßen Bevorratungsbehälter, wobei in dem Vorratsraum eine Leitungswicklung untergebracht ist, die durch eine gewickelte Leitung mit einem Durchmesser von höchstens 30mm, vorzugsweise 2mm bis 20mm, gebildet ist.

Vorzugsweise ist in der Sitzaufnahme ein Ortungsgerät zum Lokalisieren des unterirdisch verlegten Bevorratungsbehälters eingesetzt.

Schließlich betrifft die Erfindung ein System zur unterirdischen Anordnung einer erfindungsgemäßen Leitungsbevorratung, wobei zum definierten Positionieren des Bevorratungsbehälters dessen bodenseitig offene, in der umlaufenden Seitenwand des Bevorratungsbehälters ausgebildete Durchgänge mit wenigstens einer unterirdisch verlegten Tiefbauleitung belegt sind, um den Bevorratungsbehälter auch in horizontaler Ebene zu positionieren.

Weitere Eigenschaften, Vorteile und Merkmale der Erfindungen werden durch die folgende Beschreibung einer bevorzugten Ausführung der Erfindung anhand der beiliegenden Zeichnungen erläutert, in denen zeigen:
- Fig. 1: eine perspektivische Ansicht des erfindungsgemäßen Bevorratungsbehälters von unten;
- Fig. 2: eine Draufsicht auf einen an einer Baustelle positionierten und montierten Bevorratungsbehälter mit Bestückung einer Leitungswicklung, wobei zur Darstellung der Leitungswicklung der Bevorratungsbehälter teilweise seitlich aufgebrochen ist; und
- Fig. 3: eine Querschnittsansicht des von der Baustelle positionierten Bevorratungsbehälters entlang der Schnittlinien III-III nach Fig. 2.

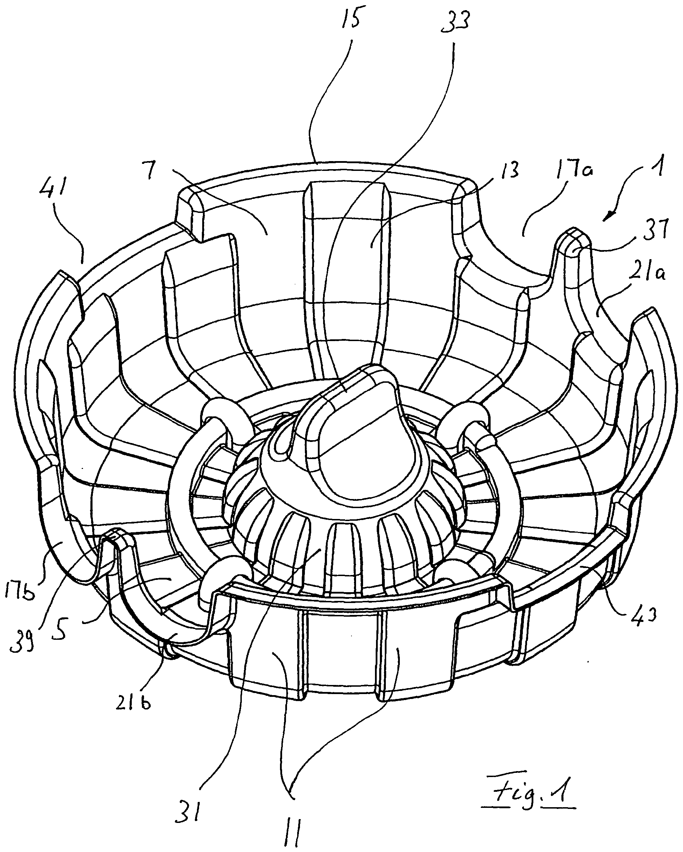

In Fig. 1 ist der erfindungsgemäße Bevorratungsbehälter im Allgemeinen mit der Bezugsziffer 1 versehen und ist von unten zeichnerisch dargestellt, wobei klar ist, dass der Bevorratungsbehälter in einer an einer Baustelle untergebrachten Betriebsposition in einer Lage positioniert ist, die bezüglich der in Fig. 1 auf den Kopf gestellt ist.

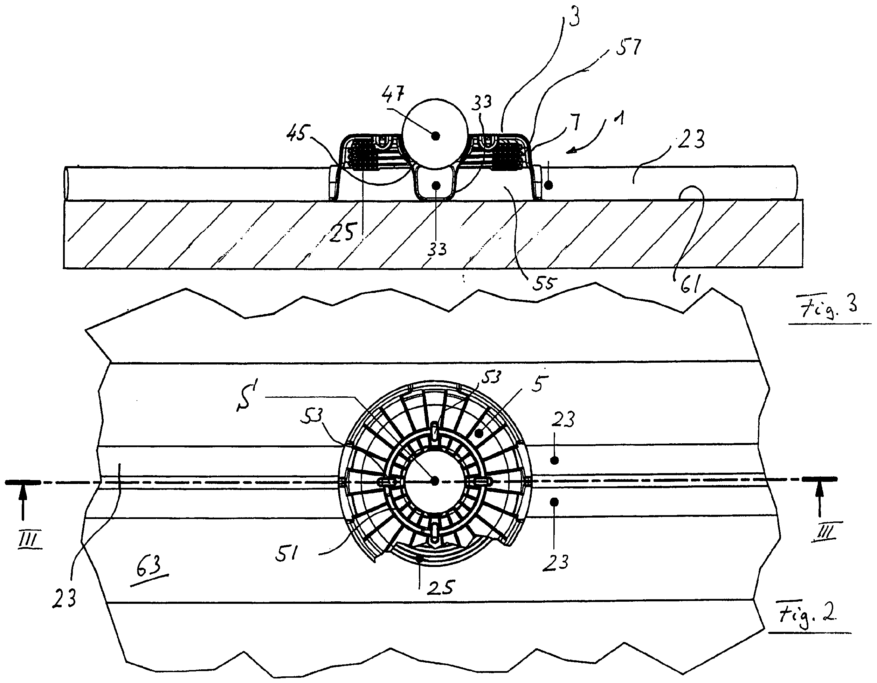

Der Bevorratungsbehälter hat eine bodenseitig offene Haubenform, die einer Kuchenbackform sehr ähnelt. Die Haubenform definiert eine Rotationssymmetrie, um eine Symmetrieachse S (Fig. 2). Die Halbschale des Bevorratungsbehälters ist aus einem Kunststoffstück gespritzt und ist starr insbesondere auf an der Oberseite liegenden Druck stabil.

Der Bevorratungsbehälter hat eine im Wesentlichen horizontale Decke 5, an die eine im Wesentlichen vertikale umlaufende Seitenwand 7 anschließt. Sowohl die Decke als auch die Seitenwand sind gleichmäßig mit nach innen und außen leicht erhabenen Versteifungsrippen 11, 13 ausgeführt. Die Versteifungsrippen erstrecken sich im Wesentlichen radial von der Symmetrieachse S nach außen und werden in diesem Verlauf in Umfangsrichtung etwas breiter.

Die umlaufende Seitenwand 7 endet bodenseitig mit einem durch Durchgänge unterbrochenen Abstellrand 15, der abschnittsweise kreisrund ist.

In der Seitenwand 7 sind zwei Paare sich gegenüberliegender Durchgänge 17a, 17b, 21a, 21b geformt, die zum Aufnehmen einer bereits an der Baustelle verlegten unterirdischen Tiefbauleitung 23 dienen. Mit der Aufnahme der Tiefbauleitung 23 ist die Position des Bevorratungsbehälters 1 in Horizontalrichtung fixiert und eine Verrückung des Bevorratungsbehälters kann nicht mehr einfach realisiert werden. Auf diese Weise ist auch die zu bevorratende Leitungswicklung 25 vor weiteren Einflüssen durch Verrückung des Bevorratungsbehälters geschützt. In jedem Paar Durchgänge 17a, 17b, 21a, 21b ist eine Tiefbauleitung 23 untergebracht. Es sei klar, dass auch nur eine Tiefbauleitung aufgenommen werden kann, wobei das jeweils andere Durchgangspaar unbelegt bleibt.

Konzentrisch zur Symmetrieachse S und zentral ist ein Wickelkern 31 an der Innenseite des Bevorratungsbehälters vorgesehen, der sich von der Innenseite der Decke 5 senkrecht nach innen vorwölbt und teilweise eine positive Halbkugelform bildet. Der Wickelkern ist zu seinem Ende hin mit einem geradlinigen Endsteg 33 ausgeführt, der als Zentralstandfuß dient, um ein sicheres Abstellen des Bevorratungsbehälters 1 auf dem Boden sicherzustellen. Dabei fluchtet der Abstellrand mit dem Wandzapf 37, 39, der zwischen den benachbarten Durchgängen 17a und 21a sowie 17b und 21b liegt. Auf diese Weise behindert der Steg 33 nicht die Durchführung der Tiefbauleitungen 23.

Des Weiteren sind in der Seitenwand 7 des Bevorratungsbehälters 1 umfangsbreite Schlitzdurchgänge 41, 43 ausgebildet, die dazu dienen, ein Ende der Leitungswicklung 25 greifen zu können, um die gewickelte Leitung aus dem Bevorratungsbehälter abzuziehen.

Ein zum Wickelkern negativ geformter Aufnahmesitz 45 ist an der Außenseite des Bevorratungsbehälters 1 ausgebildet und hat entsprechend eine negative Halbkugelform. Die Sitzaufnahme 45 dient dazu, eine Ortungskugel 47 fest aufzunehmen. Auf diese Weise kann der unterirdisch vergrabene Bevorratungsbehälter leicht geortet werden, um einen schnellen Zugriff auf die bevorratete Leitungswicklung zu erhalten.

Wie insbesondere in Fig. 2 ersichtlich ist, ist an der Außenseite der Decke 5 eine ringförmige Rinne 51 eingebracht, die sich kreisförmig konzentrisch zur Symmetrieachse S erstreckt. In 90°-Abständen sind Einbuchtungen 53 vorgesehen, die zum Einführen eines Kabelbinders geeignet sind. Die Rinne 51 entspricht im Wesentlichen dem Durchmesser der ersten Wicklung der Leitungswicklung mit dem im Wesentlichen geringsten Durchmesser, um die herum Leitungswicklung mit steigendem Durchmesser gewickelt ist. Die Rinne dient als Wickelstarthilfe zur Erstellung der Leitungswicklung 25.

Wie in Fig. 3 ersichtlich ist, kann der Bevorratungsbehälter 1 in zwei Haupträume unterteilt werden, wobei die Haupträume nicht strukturell voneinander mittels einer Wand getrennt sind. Der untere Raum kann als Durchführraum 55 bezeichnet werden, dessen Höhe im Wesentlichen der Höhendimension der Tiefbauleitung 23 entspricht. Der darüberliegende Raum kann als Vorratsraum 57 bezeichnet werden, in dem die Leitungswicklung 25 angeordnet ist. Die vertikalen Höhen der beiden Räume sind im Wesentlichen gleich groß.

Im montierten Zustand des Bevorratungsbehälters liegt die Leitungswicklung 25 auf der Oberseite der Tiefbauleitung 23 auf und somit im Abstand von dem Boden 61 der Baustelle, an dem der Bevorratungsbehälter positioniert ist. Üblicherweise ist der Bevorratungsbehälter in einem freigelegten Schacht 63 zu deponieren, entlang dem die Tiefbauleitung 23 verläuft. Der Bevorratungsbehälter wird gegebenenfalls mit Erdmaterial verschüttet, ist allerdings über das Ortungsgerät 47 leicht wieder lokalisierbar. Mit dem erfindungsgemäßen Behälter ist es möglich, flexibel und schnell auf einen unerwarteten Leitungsbedarf zu reagieren. Auch im Falle eines Leitungsbedarfs viele Jahre nach Erstellung des Gebäudes kann ein adaptivfähiges Leitungssystem erweitert werden, weil die selben Leitungsstränge in dem Bevorratungsbehälter vorliegen.

Die in der vorstehenden Beschreibung, den Figuren und den Ansprüche offenbarten Merkmale können sowohl einzeln als auch in beliebiger Kombination für die Realisierung der Erfindung in den verschiedenen Ausgestaltungen von Bedeutung sein. Der Schutzbereich wird nur durch die beigefügten Ansprüche begrenzt.

### Bezugszeichenliste

- 1: Bevorratungsbehälter
- 5: Decke
- 7: Seitenwand
- 11, 13: Vertiefungsrippen
- 15: Abstellrand
- 17a, 17b: Durchgänge
- 21a, 21b: Durchgänge
- 23: Tiefbauleitung
- 25: Leitungswicklung
- 31: Wickelkern
- 33: Endsteg
- 37,39: Wandzapf
- 41, 43: Schlitzdurchgänge
- 45: Aufnahmesitz
- 47: Ortungskugel
- 51: Rinne
- 53: Einbuchtung
- 55: Durchführraum
- 57: Vorratsraum
- 61: Boden
- 63: Schacht
- S: Symmetrieachse

## Patentansprüche

1. Bevorratungsbehälter (1) für eine flexible Leitung, wie ein Kabel, ein Kabelschutzrohr oder Leerrohr, zum unterirdischen Deponieren, **gekennzeichnet durch** eine Schalenform mit einer Innenwölbung, die einen Vorratsraum für eine Leitungswicklung (25) bildet, wobei an einer Außenseite eines Deckenbereichs des Bevorratungsbehälters eine kreisförmige Vertiefung oder Rinne (51) als Wickelstarthilfe ausgebildet ist.

2. Bevorratungsbehälter (1) nach Anspruch 1, bei dem der Vorratsraum (57) und/oder die Innenwölbung rotationssymmetrisch ist und/oder einen Wickelkern (31) umfasst, um den die Leitungswicklung (25) läuft und/oder der konzentrisch zur Rotationssymmetrieachse (S) liegt und/oder das Gehäuse und der Wickelkern (31) aus einem Kunststoffstück gespritzt sind, wobei insbesondere eine umlaufende seitliche Innenwand und eine Decke (5) der Innenwölbung sowie eine Außenseite des Wickelkerns (31) einen vorzugsweise kreisförmigen Vorratsraumkanal begrenzen, dessen radiale Breite größer als der maximale Radius des Wickelkerns (31) ist.

3. Bevorratungsbehälter (1) nach Anspruch 1 oder 2, der zwei Raumebenen aufweist, von denen im montierten Zustand des Bevorratungsbehälters (1) der Vorratsraum (57) oberhalb eines Durchführraums (55) für wenigstens eine bereits verlegte Tiefbauleitung liegt, der zur vollständigen Aufnahme einer Tiefbauleitung dimensioniert ist und/oder seitlich größtenteils von einer Seitenwand (7) begrenzt ist, die wenigstens ein Durchgangspaar zum Aufnehmen der Tiefbauleitung in den Durchführraum und zum Positionieren des Bevorratungsbehälters (1) relativ zu der Tiefbauleitung aufweist, und/oder bodenseitig frei zugänglich ist.

4. Bevorratungsbehälter (1) nach einem der vorstehenden Ansprüche, bei dem er eine Glocken- oder Haubenform aufweist, die eine insbesondere geschlossene Decke (5) und eine umlaufende, vorzugsweise kreisförmige Seitenwand (7) umfasst und bodenseitig offen ist, wobei insbesondere die Seitenwand (7) einen freien vorzugsweise kreisförmigen Abstellrand (15) bildet und/oder die Seitenwand (7) wenigstens ein Paar, vorzugsweise zwei Paare, sich diametral gegenüberliegende bodenseitig offene Durchgänge (17a, 17b, 21a, 21b) aufweist, die derart dimensioniert sind, dass eine bereits verlegte Tiefbauleitung, wie eine Gasleitung, ein Leitungsbündel, eine Wasserleitung, wie ein PE-Rohr, vorzugsweise mit einem Außendurchmesser mit bis zu 100 mm, vorzugsweise bis zu 50 oder 60 mm, vollständig aufgenommen ist, so dass insbesondere sich die Tiefbauleitung im wesentlichen geradlinig durch den Bevorratungsbehälter (1) unterhalb des Vorratsraums seitlich an dem Wickelkern (31) vorbei erstreckt.

5. Bevorratungsbehälter (1) nach Anspruch 4, bei dem in der Seitenwand (7) wenigstens einen Schlitzdurchgang, vorzugsweise zwei sich diametral gegenüberliegende Schlitzdurchgänge (41, 43), ausgebildet ist, der insbesondere bodenseitig offen ist und/oder derart dimensioniert ist, dass die gewickelte Leitung durch den Schlitzdurchgang abwickelbar ist und/oder eine Höhe aufweist, die kleiner als die Umfangsbreite ist, die größer als 50 mm ist.

6. Bevorratungsbehälter (1) nach einem der vorstehenden Ansprüche, bei dem die Außenseite des Deckenbereichs im Wesentlichen horizontal ist, wobei insbesondere die Vertiefung in deren Verlauf eine konstante Tiefe zur Außenseite aufweist und/oder mit einer Hinterschnittaufnahme und einem Verjüngungszugang derart dimensioniert ist, dass die Außendurchmesserabmessung der Leitung kleiner als die Hinterschnittaufnahme und größer als der Verjüngungszugang ist, wobei insbesondere im Verlauf der Wickelstarthilfe wenigstens eine über die Vertiefung hinaus axial eindringende Einbuchtung (53), vorzugsweise vier in äquidistanten Abständen angeordnete Einbuchtungen, zum Einfädeln eines Leitungs- oder Kabelbinders ausgebildet ist.

7. Bevorratungsbehälter (1) nach einem der vorstehenden Ansprüche, bei dem an einer Außenseite eines Deckenabschnitts des Bevorratungsbehälters eine Sitzaufnahme (45) für ein Ortungsgeräts (47) ausgebildet ist, wobei die Sitzaufnahme (45) zentral zur Rotationssymmetrieachse (S) des Bevorratungsbehälters (1) ausgebildet ist und/oder eine im wesentlichen halbkugelförmige Aufnahmefläche definiert und/oder die Sitzaufnahme (45) im wesentlichen die Negativform des Wickelkerns (31) formt.

8. Unterirdische Leitungsbevorratung mit einem nach einem der vorstehenden Ansprüche ausgebildeten Bevorratungsbehälter (1), wobei in dem Vorratsraum eine Leitungswicklung (25) untergebracht ist, die durch eine gewickelte Leitung mit einem Durchmesser von höchstens 30 mm, vorzugsweise von etwa 2 bis 20 mm, gebildet ist.

9. Unterirdische Leitungsbevorratung nach Anspruch 8 wenn abhängig von Anspruch 7, bei der in der Sitzaufnahme (45) ein Ortungsgerät (47) aufgenommen ist.

10. System zur unterirdischen Anordnung einer nach Anspruch 8 oder 9 ausgebildeten Leitungsbevorratung, wobei zum definierten Positionieren des Bevorratungsbehälters (1) dessen Durchgänge mit wenigstens einer unterirdisch verlegten Tiefbauleitung belegt sind.

## Claims

1. Stocking container (1) for a flexible conduit, such as a cable, a cable protection tube, or an empty tube for subterranean storing, **characterized by** a shell form having an internal bulge forming a stocking room for a conduit winding (25), wherein as an initial winding support a circular recess or slot (51) being formed at an outside of a top area of the stocking container.

2. Stocking container (1) according to claim 1, wherein the stocking room (57) and/or the internal bulge is rotationally symmetrical and/or includes a winding core (31) around which the conduit winding (25) runs and/or which is concentric to the rotational symmetry axis (S) and/or wherein the casing and the winding core (31) are die casted as a plastic piece, wherein particularly a surrounding inner sidewall, a top (5) of the internal bulge, and an outside of the winding core (31) confine a preferably circular stocking room channel, from which the radial width is greater than the maximum radius of the winding core (31).

3. Stocking container (1) according to claim 1 or 2 having two room levels wherein, in mounted condition of the stocking container, the stocking room (57) is located above a feed-through room (55) for at least one already laid subterranean conduit being scaled for a complete intake of an subterranean conduit and/or being sidewise substantially confined by a sidewall (7), the sidewall having at least a pair of passages to intake the subterranean conduit within the feed-through room and to position the stocking container (1) relatively to the subterranean conduit, and/or being accessible from the bottom.

4. Stocking container (1) according to one of the preceding claims, having a bell shape or a hood shape, particularly having a closed top (5) and a surrounding, preferably circular sidewall (7) and being open at the bottom, wherein particularly the sidewall (7) forms a free preferably circular bottom edge (15) and/or having at least a pair of passages, preferably two pairs (17a, 17b, 21a, 21b), opposing each other diametrically and being open at the bottom, the passages being scaled such that an already laid subterranean conduit, such as a gas conduit, a bunch of conduits, a water conduit, as a PE-tube, preferably with an outer diameter up to 100 mm, preferably up to 50 or 60 mm, is completely intaken, such that particularly the subterranean conduit substantially extends straight through the stocking container (1) below the stocking room and beside the winding core (31).

5. Stocking container (1) according to claim 4, wherein at least one slit passage, preferably two diametrically opposing slit passages (41, 43) are formed within the sidewall (7), particularly being open at the bottom and/or being scaled such that the winded conduit can be unwinded through the slit passage and/or having a height, being smaller than the circumferential width, being greater than 50 mm.

6. Stocking container (1) according to one of the preceding claims, wherein the outside of the top area is substantially horizontal, particularly the course of the recess having a constant depth to the outside and/or being scaled with an undercut reception and a tapered access such that the outer diameter of the conduit is smaller than the undercut reception and greater than the tapered access, wherein particularly in course of the initial winding support at least one indentation (53) penetrating axially beyond the recess, preferably four indentations arranged in equidistance distances, is/are formed for threading a conduit binder or a cable binder.

7. Stocking container (1) according to one of the preceding claims, wherein a seating (45) for a detection device (47) is arranged at an outside of a top segment of the stocking container, the seating being formed centrally to the rotational symmetry axis (S) of the stocking container (1) and/or defining a substantial hemispherical seating surface and/or the seating (45) substantially forming the negative form of the winding core (31).

8. Subterranean conduit stocking with a stocking container (1) according to one of the preceding claims, wherein a conduit winding (25) is stocked within the stocking room, being formed by a winded conduit having a diameter not exceeding 30 mm, preferably about 2 to 20 mm.

9. Subterranean conduit stocking according to claim 8, if depending on claim 7, wherein a detection device (47) is seated within the seating (45).

10. System for subterranean arrangement of conduit stocking according to claim 8 or 9, where the stocking containers (1) passages are occupied by at least one subterranean laid conduit for defined positioning of the stocking container (1).

## Revendications

1. Conteneur de réserve (1) d'un conduit flexible, tel qu'un câble, un fourreau de câble ou un tube vide, pour la décharge souterraine, **caractérisé par** une forme de coque avec une courbure intérieure qui forme un espace de réserve pour un enroulement de conduit (25), un creux ou une rigole (51) circulaire étant conçu(e) sur une face extérieure d'une zone de fond supérieur du conteneur de réserve en tant qu'aide au démarrage de l'enroulement.

2. Conteneur de réserve (1) selon la revendication 1, sur lequel l'espace de réserve (57) et/ou la courbure intérieure est symétrique en rotation et/ou comprend un noyau d'enroulement (31), autour duquel passe l'enroulement de conduit (25) et/ou qui est concentrique par rapport à l'axe (S) de symétrie en rotation et/ou en ce que le corps et le noyau d'enroulement (31) sont injectés en une pièce en matière plastique, notamment une paroi intérieure latérale périphérique et un fond supérieur (5) de la courbure intérieure, ainsi qu'une face extérieure du noyau d'enroulement (31) délimitant un canal d'espace de réserve de préférence de forme circulaire, dont la largeur radiale est supérieure au rayon maximal du noyau d'enroulement (31).

3. Conteneur de réserve (1) selon la revendication 1 ou la revendication 2 qui comporte deux plans spatiaux parmi lesquels, lorsque le conteneur de réserve (1) est monté, l'espace de réserve (57) se situe au-dessus d'un espace de passage (55) pour au moins un conduit de génie civil qui est dimensionné pour recevoir complètement un conduit de génie civil et/ou qui est délimité en majeure partie latéralement par une paroi latérale (7) qui comporte au moins une paire de passages destinée à recevoir le conduit de génie civil dans l'espace de passage et pour positionner le conteneur de réserve (1) par rapport au conduit de génie civil et/ou qui est librement accessible du côté du sol.

4. Conteneur de réserve (1) selon l'une quelconque des revendications précédentes, lequel présente la forme d'une cloche ou d'un capot qui comprend un fond supérieur (5) notamment fermé et une paroi latérale (7) de préférence de forme circulaire et qui est ouvert(e) du côté du sol, notamment la paroi latérale (7) formant un bord de dépose (15) libre, de préférence de forme circulaire et/ou la paroi latérale (7) comportant au moins une paire, de préférence deux paires de passages (17a, 17b, 21a, 21b) diamétralement opposés, ouverts du côté du sol, qui sont dimensionnés de telle sorte qu'un conduit de génie civil déjà posé, tel qu'un conduit de gaz, un faisceau de lignes, une conduite d'eau, comme un tube en PE, de préférence avec un diamètre extérieur de jusqu'à 100 mm, de préférence de jusqu'à 50 ou 60 mm soit entièrement réceptionné, de sorte que notamment le conduit de génie civil s'étende de manière sensiblement rectiligne à travers le conteneur de réserve (1), en-dessous de l'espace de réserve, en passant latéralement devant le noyau d'enroulement (31).

5. Conteneur de réserve (1) selon la revendication 4, sur lequel dans la paroi latérale (7) est conçu au moins un passage en fente, de préférence deux passages en fentes (41, 43) diamétralement opposés, qui est ouvert notamment du côté du sol et/ou qui est dimensionné de telle sorte que le conduit enroulé soit déroulable à travers le passage en fente et/ou qui présente une hauteur qui est inférieure à la largeur circonférentielle qui est supérieure à 50 mm.

6. Conteneur de réserve (1) selon l'une quelconque des revendications précédentes, sur lequel la face extérieure de la zone de fond supérieur est sensiblement horizontale, notamment dans son trajet, le creux présentant une profondeur constante par rapport à la face extérieure et/ou étant dimensionné avec un logement en contre-dépouille et un accès en rétrécissement de telle sorte que la dimension du diamètre extérieur du conduit soit inférieure au logement en contre-dépouille et supérieure à l'accès en rétrécissement, notamment sur le trajet de l'aide au démarrage de l'enroulement étant conçue au moins une gorge (53) pénétrant en direction axiale au-delà du creux, de préférence quatre gorges placées à des écarts équidistants pour enfiler un serre-conduit ou un serre câble.

7. Conteneur de réserve (1) selon l'une quelconque des revendications précédentes, sur lequel sur une face extérieure d'une portion de fond supérieur du conteneur de réserve est conçu un siège de logement (45) d'un appareil de localisation (47), le siège de logement (45) étant conçu de manière centrale par rapport à l'axe de symétrie en rotation (S) du conteneur de réserve (1) et/ou définissant une surface de logement de forme sensiblement semi-sphérique et/ou le siège de logement (45) formant sensiblement une forme qui est le négatif du noyau d'enroulement (31).

8. Réserve souterraine de conduit avec un conteneur de réserve (1) conçu selon l'une quelconque des revendications précédentes, dans l'espace de réserve étant introduit un enroulement de conduit (25) qui est formé d'un conduit enroulé d'un diamètre d'un maximum de 30 mm, de préférence d'environ 2 à 20 mm.

9. Réserve souterraine de conduit selon la revendication 8, si elle est dépendante de la revendication 7, sur laquelle dans le siège de logement (45) est réceptionné un appareil de localisation (47).

10. Système d'agencement souterrain d'une réserve de conduit conçue selon la revendication 8 ou la revendication 9, pour le positionnement défini du conteneur de réserve (1), les passages de celui-ci étant remplis d'au moins un conduit de génie civil, posé sous terre.
